# EUROPÄISCHE PATENTSCHRIFT

(11) **EP 0 836 017 B1**
(45) Veröffentlichungstag und Bekanntmachung des Hinweises auf die Patenterteilung: **04.12.2002**
(21) Anmeldenummer: 97114535.4
(22) Anmeldetag: 22.08.1997
(51) Int. Cl.: F16C 11/04, F16C 11/02, E05D 5/12

(54) **Lagerung für einen Hebel**
Lever bearing
Palier pour levier

(30) Priorität: 08.10.1996 DE 19641424
(43) Veröffentlichungstag der Anmeldung: 15.04.1998
(73) Patentinhaber: Bayerische Motoren Werke Aktiengesellschaft, 80788 München (DE)
(72) Erfinder: Orthuber, Günter, 83737 Irschenberg (DE); Bräuherr, Günther, 85134 Stammham (DE)

(56) Entgegenhaltungen:
- EP-A- 0 501 102
- FR-A- 2 468 026
- GB-A- 490 718
- US-A- 5 320 443

## Beschreibung

Die Erfindung betrifft eine Lagerung für einen Hebel gemäß dem Oberbegriff des Patentanspruchs 1. Insbesondere betrifft die Erfindung die Lagerung eines Schwenkhebels, bei der ein Spanndom den Fest- oder Preßsitz an einem Lagerbock bewirkt, wobei der Spanndom gleichzeitig als Lagerstelle für den Schwenkhebel benutzt wird.

Bei einer bekannten Lagerung ist der Spanndorn ein rohrförmiges oder zylindrisches Bauteil mit einem Längsschlitz, der sich über die gesamte Länge des Spanndoms erstreckt. Die beiden gegenüberliegenden Endabschnitte des Spanndoms sind im montierten Zustand in den Bohrungen oder Öffnungen des Lagerbockes festgeklemmt. Die Innendurchmesser der Lagerbock-Bohrungen bestimmen den Außendurchmesser des bekannten Spanndoms nach der Montage. Je nach der Toleranz der Lagerbock-Bohrungen können sich unterschiedliche Außendurchmesser ergeben. Diese unterschiedlichen Außendurchmesser bewirken, daß das Spiel zwischen dem Innendurchmesser der Schwenkhebel-Bohrung und dem Außendurchmesser des Spanndoms unterschiedlich groß ist. Im ungünstigen Fall kann es bei relativ großen Spiel-Passungen zu unerwünschten Geräuschen, z. B. einem Knacken, bei einer Betätigung des Schwenkhebels kommen.

Aufgabe der Erfindung ist es, eine Lagerung für einen Hebel zu schaffen, bei dem die Geräuschbildung, die durch zu große Spiel-Passungen entsteht, vermieden oder zumindest minimiert wird.

Diese Aufgabe wird bei einer erfindungsgemäßen Lagerung für einen Hebel durch die Merkmale des Patentanspruchs 1 gelöst.

Durch die Ausbildung geeigneter Querschlitze im Spanndom an den Übergängen zwischen der jeweiligen Lagerbockbohrung und der Schwenklagerbohrung ist ein Ausgleich der unterschiedlichen Bohrungstoleranzen des Lagerbockes möglich. Durch die Querschlitze ist der Außendurchmesser des mittleren Bereichs des Spanndornes nicht mehr durch die Innendurchmesser der gegenüberliegenden Lagerbock-Bohrungen vorbestimmt. Entsprechend liegt der mittlere Bereich des Spanndomes bei einer entsprechenden Auslegung genau und spielfrei an der Innenfläche der Schwenklager-Bohrung an. Durch die Ausbildung der Querschlitze am Spanndom ist der Außendurchmesser der Lagerstelle für den Schwenkhebel unabhängig von den Lagerbock-Bohrungstoleranzen.

Eine Ausführungsform der Erfindung wird nachstehend anhand der Zeichnungen beispielshalber beschrieben. Dabei zeigen:
- Figur 1: einen Längsschnitt durch eine bekannte Lagerung, bei der der Außendurchmesser eines Spanndomes durch die Bohrungen des Lagerbockes bestimmt ist und
- Figur 2: eine Lagerung für einen Schwenkhebel, bei dem der Außendurchmesser des Spanndomes zur Lagerung des Schwenkhebels unabhängig ist vom Außendurchmesser des Spanndomes zum Einpressen in die Lagerbock-Bohrungen.

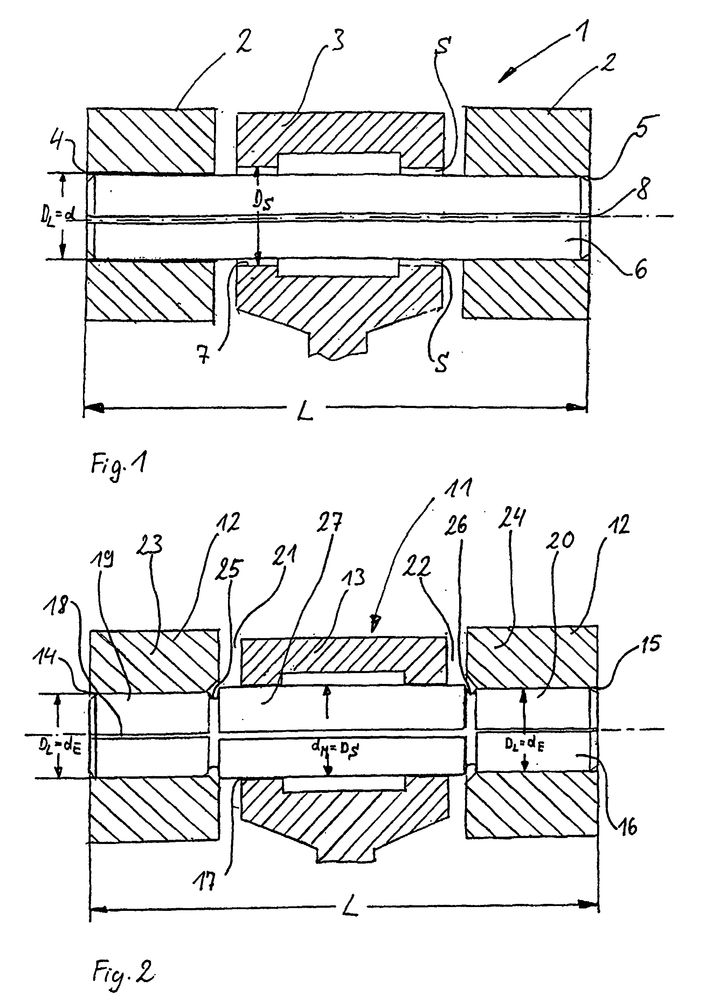

Die Figur 1 zeigt eine Lagerung 1, die einen Lagerbock 2, einen Schwenkhebel 3 und einen in Lagerbohrungen 4 und 5 des Lagerbockes 2 festsitzenden, zylindrischen Spanndom 6 aufweist. Der Spanndom 6 ist durch eine Schwenkhebel-Bohrung 7 hindurchgeführt. Der Spanndom 6 weist einen Längsschlitz 8 auf, der sich über die gesamte Länge L des Spanndomes 6 erstreckt. Der Außendurchmesser "d" des bekannten Spanndomes 6 ist durch den Innendurchmesser D_{L} der Lagerbohrungen 4, 5 des Lagerbockes 2 bestimmt. Aufgrund von Bohrungstoleranzen zwischen den Lagerbohrungen 4, 5 und der Schwenkhebelbohrung 7 kann es sich ergeben, daß der Innendurchmesser D_{S} der Schwenkhebel-Bohrung 7 größer ist als der Innendurchmesser D_{L} der Lagerbohrungen 4, 5. Daraus resultiert ein Spiel S zwischen dem Spanndom 6 und der Schwenkhebel-Bohrung 7, das beim Betätigen des Schwenkhebels 3 Knackgeräusche oder dergleichen auslösen kann.

Die Figur 2 zeigt eine Lagerung 11, die wie die Lagerung 1 der Figur 1 einen Lagerbock 12, einen Schwenkhebel 13 und einen Spanndom 16 aufweist. Der Lagerbock 12 ist mit Lagerbohrungen 14, 15 versehen, in denen die Endabschnitte 19, 20 des Spanndomes 16 in einer Preßpassung festsitzen. Der Spanndom 16 ist mit einem durchgehenden Längsschlitz 18 versehen. Zusätzlich weist der Spanndom 16 an den Übergängen 21, 22 zwischen den Lagerabschnitten 23, 24 des Lagerbockes 12 und dem Schwenkhebel 13 Querschlitze 25, 26 auf. Zwischen den Querschlitzen 25, 26 befindet sich ein mittlerer Abschnitt 27 des Spanndoms 16, auf dessen Außenoberfläche der Schwenkhebel 13 gelagert ist.

Die Querschlitze 25, 26 beginnen in der in der Figur 2 gezeigten Ausführungsform am Längsschlitz 18. Die Länge der Querschlitze 25, 26 bestimmt sich durch die Auslegung des Spanndomes 16 aufgrund des verwendeten Materials und der erforderlichen Spannkraft in den Preßsitzen sowie aus den Bohrungstoleranzen für die Lagerbohrungen 14, 15 und die Schwenkhebelbohrung 17. Aufgrund der Querschlitze 25, 26 ist ein Ausgleich der unterschiedlichen Bohrungstoleranzen möglich, so daß der Spanndom 16 der Figur 2 an den Endabschnitten 19, 20 einen kleineren Außendurchmesser d_{E} aufweist als der Außendurchmesser d_{M} des mittleren Abschnittes 27 des Spanndomes 16. Der mittlere Abschnitt 27 des Spanndornes 16 liegt somit spielfrei an der Innenfläche der Schwenkhebel-Bohrung 17 an. Dadurch werden Geräusche, die durch eine entsprechend große Spielpassung entstehen, vermieden. Aus der Figur 2 geht hervor, daß der Außendurchmesser d_{E} der Endabschnitte 19, 20 des Spanndoms 16 mit dem Innnendurchmesser D_{L} der Lagerbohrungen 14, 15 des Lagerbockes 12 und der Außendurchmesser d_{M} des mittleren Abschnittes 27 des Spanndomes 16 mit dem Innendurchmesser D_{S} der Lagerbohrung 17 des Schwenkhebels 13 übereinstimmt.

## Patentansprüche

1. Lagerung für einen Hebel, mit einem Lagerbock mit zwei voneinander beabstandeten Lagerabschnitten, mit einem zwischen den beiden Lagerabschnitten angeordneten Schwenkhebel und mit einem Spanndom, der in entsprechenden Öffnungen der Lagerabschnitte mit seinen Endabschnitten in jeweils einem Festsitz angeordnet ist und dessen mittlerer Abschnitt als Lagerstelle für den Schwenkhebel dient, wobei der Spanndom einen durchgehenden Längsschlitz aufweist, **dadurch gekennzeichnet, daß** der Spanndom (16) an den Übergängen (21, 22) zwischen den Lagerabschnitten (23, 24) des Lagerbockes (12) und dem Schwenkhebel (13) Querschlitze (25, 26) aufweist, die so ausgebildet sind, daß sich der mittlere Abschnitt (27) des Spanndomes (16) spielfrei einer Lageröffnung (17) des Schwenkhebels (13) anpaßt

2. Lagerung nach Anspruch 1, **dadurch gekennzeichnet, daß** der Schwenkhebel (13) Teil eines Feststellers für eine Kraftfahrzeug-Tür ist.

## Claims

1. A bearing for a lever, comprising a bearing block having two spaced-apart portions, a rocking lever disposed between the two bearing portions and a tensioning spindle, the end portions of which are interference-fitted in corresponding openings in the bearing portions and the middle portion of which serves as a bearing for the rocking lever, wherein the spindle has a continuous longitudinal slot, **characterised in that** the spindle (16), at the transitions (21, 22) between the rocking lever (13) and the portions (23, 24) of the bearing block (12), has transverse slots (25, 26) which are shaped so that the middle portion (27) of the tensioning spindle (16) fits without clearance in a bearing opening (17) in the rocking lever (13).

2. A bearing according to claim 1, **characterised in that** the rocking lever (13) is part of a shift lock or end stop for a motor vehicle door.

## Revendications

1. Palier de levier comprenant un bloc de palier à deux segments de palier écartés l'un de l'autre, et entre les deux segments de palier, un levier pivotant ainsi qu'une broche de serrage installée avec ces segments d'extrémité chaque fois dans un siège pressé avec des orifices correspondants des segments de palier et dont le siège intermédiaire sert de point de palier pour le palier pivotant, la broche de serrage ayant une fente longitudinale continue,
**caractérisé en ce que**
la broche de serrage (16) comporte aux passages (21, 22) entre les segments de palier (23, 24) du bloc de palier (12) et du levier pivotant (13), des fentes transversales (25, 26) réalisées pour que le segment intermédiaire (27) de la broche de serrage (16) s'adapte sans jeu dans une ouverture (17) du levier pivotant (13).

2. Palier selon la revendication 1,
**caractérisé en ce que**
le levier pivotant (13) est une partie d'un actionneur de porte de véhicule automobile.
